(19) Europäisches Patentamt
European Patent Office
Office européen des brevets

(11) **EP 3 209 057 B1**

(12) **EUROPEAN PATENT SPECIFICATION**

(45) Date of publication and mention
of the grant of the patent:
**09.01.2019 Bulletin 2019/02**

(21) Application number: **14906077.4**

(22) Date of filing: **13.11.2014**

(51) Int Cl.:
**H04W 28/08** (2009.01)     **H04L 5/00** (2006.01)

(86) International application number:
**PCT/CN2014/091002**

(87) International publication number:
**WO 2016/074194 (19.05.2016 Gazette 2016/20)**

(54) **DATA TRANSMISSION METHOD, DEVICE AND SYSTEM**

DATENÜBERTRAGUNGSVERFAHREN, VORRICHTUNG UND -SYSTEM

PROCÉDÉ, DISPOSITIF ET SYSTÈME DE TRANSMISSION DE DONNÉES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**23.08.2017 Bulletin 2017/34**

(73) Proprietor: **Huawei Technologies Co., Ltd.
Longgang District
Shenzhen, Guangdong 518129 (CN)**

(72) Inventors:
  • **WANG, Da
    Shenzhen
    Guangdong 518129 (CN)**
  • **WANG, Jian
    Shenzhen
    Guangdong 518129 (CN)**

(74) Representative: **Thun, Clemens
    Mitscherlich PartmbB
    Patent- und Rechtsanwälte
    Sonnenstraße 33
    80331 München (DE)**

(56) References cited:
**WO-A2-2009/118097     CN-A- 102 378 253
CN-A- 103 547 340     CN-A- 104 038 970
CN-A- 104 065 605     US-A1- 2013 308 504**

• **ERICSSON ET AL: "On definitions of carrier types", 3GPP DRAFT; R1-100038, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Valencia, Spain; 20100118, 12 January 2010 (2010-01-12), XP050417794, [retrieved on 2010-01-12]**
• **ERICSSON AND ST-ERICSSON: "Draft response to incoming RAN1 LS on Carrier Aggregation Types in R1-100828", 3GPP DRAFT; R4-100568, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG4, no. San Francisco, USA; 20100222, 16 February 2010 (2010-02-16), XP050426026, [retrieved on 2010-02-16]**

**Description**

**TECHNICAL FIELD**

The present invention relates to the communications field, and in particular, to a data transmission method, a device, and a system.

**BACKGROUND**

In a wireless communications network, data transmission needs to occupy a particular bandwidth, and data is carried on a carrier for transmission. The bandwidth can indicate an amount of data to be transmitted in a constant time. In an LTE (Long Term Evolution, Long Term Evolution) system, each carrier uses a 20-MHz bandwidth, and the 20-MHz bandwidth can transmit at most 110 PRBs (Physical Resource Block, physical resource block). Different quantities of PRBs correspond to different TBSs (Transport Block Size, transport block size) on different MCS (Modulation and Coding Scheme, modulation and coding scheme) levels. The TBS is used to indicate an amount of data to be transmitted. A corresponding code block size is selected for data coding according to a different TBS.

With development of a mobile communications system, a wireless communications network requires a higher data transmission rate. Therefore, the system needs to support a larger carrier bandwidth. For example, massive CA (massive Carrier Aggregation, massive carrier aggregation technology) needs to support carrier aggregation on a bandwidth more than 20 MHz. Certainly, the massive CA technology is only used as an example for description, and it does not represent that only the massive CA technology needs to support data transmission on the bandwidth more than 20 MHz. In this way, a maximum transport block of the communications system is probably greater than 110 PRBs. However, in an existing modulation and coding scheme, no TBS that corresponds to more than 110 PRBs exists. This results in that modulation and coding cannot be performed on data when a transport block includes more than 110 PRBs.

For example, US 2013/0308504A1 refers to a user equipment determining a transport block size column indicator representative of a number of resource blocks based on a number of allocated resource blocks, an adjustment factor, and a limiting factor. The transport block size column indicator is determined by applying the adjustment factor to the number of allocated resource blocks and comparing a result of applying the adjustment factor to the number of allocated resource blocks to the limiting factor. The transport block size column indicator is selected as either the result or the limiting factor as the based on the comparison.

Further, WO 2009/118097A2 refers to a method for providing control signalling associated to a transport block in a mobile communication system. In order to obtain a control signaling mechanism that is increasing the number of available transport block sizes that can be used for transmissions of a transport block, without increasing the control signaling overhead, this document suggests to apply a partitioning to the transport block size indices defined over the entire range of applicable resource allocation sizes and modulation and coding scheme levels, wherein the transport blocks size indicator is selecting the transport block size index from a respective partition depending on the resource allocation size.

Further, Ericsson et. al.: "On definitions of carrier types", 3GPP DRAFT; RI-100038, 3RD GENERATION PARTNERSHIP PROJECT (3GPP), MOBILE COMPETENCE CENTRE, refers to definitions of carrier types.

Further, Ericsson and ST-Ericsson: "Draft response to incoming RANI LS on carrier aggregation types in R1-100828", 3GPP DRAFT, R4-100568, 3RD GENERATION PARTNERSHIP PROJECT (§GPP), MOBILE COMPETENCE CENTRE, refers to a draft response to incoming RANI LS on carrier aggregation types in R1-100828.

Further, CN 104 038 970 A refers to a communication processing method and a piece of equipment. The terminal-side method comprises the following steps: N'PRB and IMCS are acquired from received downlink control information; when IMCS is equal to 29, 30 or 31, a coefficient corresponding to IMCS carried in the information is determined according to a predetermined corresponding relation between IMCS and the coefficient; a physical resource block size parameter greater than or equal to N'PRB and smaller than or equal to 110 is determined based on the product of N'PRB and the coefficient; a transmission block size index used by a transmission block is determined as the maximum transmission block size index value corresponding to a modulation level used by the transmission block; and the size of the transmission block is determined according to the physical resource block size parameter and the transmission block size index used by the transmission block. The communication processing method and the equipment are applied to NCT carriers, resources on carriers can be fully utilized, and the peak rate of carriers can be improved.

**SUMMARY**

Embodiments of the present invention provide a data transmission method, a device, and a system, to resolve a problem that modulation and coding cannot be performed on data because no corresponding TBS exists when a quantity of physical resource blocks PRBs of a wireless communications system is greater than 110.

To achieve the foregoing objective, the following technical solutions are used in the embodiments of the present invention.
In a first aspect a data transmission method is provided, the method comprising:

- obtaining, by a first device, grouping information, wherein the grouping information is used to indicate information of grouping N physical resource blocks PRBs into M PRB groups, N is an integer greater than 110, and M is a positive integer;
- performing, by the first device, modulation and coding by using a transport block size TBS that corresponds to each of the M PRB groups, to generate modulation symbols; and
- transmitting, by the first device, the modulation symbols to a second device by using a physical resource that corresponds to the N PRBs,
  characterized in that
- a code block length that corresponds to a quantity of PRBs in a m$^{th}$ PRB group of the M PRB groups is a second threshold, wherein m is an integer that satisfies $1 \leq m \leq M$.

In a second aspect a data reception method is provided, the method comprising:

- obtaining, by a second device, grouping information, wherein the grouping information is used to indicate information of grouping N physical resource blocks PRBs into M PRB groups, N is an integer greater than 110, and M is a positive integer;
- receiving, by the second device, data on a physical resource that corresponds to the N PRBs; and
- demodulating, by the second device, the data according to the grouping information,
  characterized in that
- a code block length that corresponds to a quantity of PRBs in a m$^{th}$ PRB group of the M PRB groups is a second threshold, wherein m is an integer that satisfies $1 \leq m \leq M$.

In a third aspect a first device configured and intended to perform the method according to the first aspect is provided.
In a fourth aspect a second device configured and intended to perform the method according to the second aspect is provided.
According to the data transmission method, the device, and the system that are provided in the embodiments of the present invention, a first device groups N physical resource blocks PRBs into M PRB groups, performs modulation and coding by using a TBS that corresponds to each of the M PRB groups, to generate modulation symbols, and transmits data to a second device by using a physical resource that corresponds to the N PRBs. Therefore, a quantity of PRBs in each group after the grouping is applicable to an existing modulation scheme, thereby resolving a problem that modulation and coding cannot be performed on data because no corresponding TBS exists when a quantity of physical resource blocks PRBs of a wireless communications system is greater than 110.

**BRIEF DESCRIPTION OF DRAWINGS**

To describe the technical solutions in the embodiments of the present invention or in the prior art more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.

FIG. 1 is a schematic flowchart of a data transmission method according to an embodiment of the present invention;
FIG. 2 is a schematic diagram of a PRB grouping manner according to an embodiment of the present invention;
FIG. 3 is a schematic flowchart of a data transmission method according to another embodiment of the present invention;
FIG. 4 is a schematic structural diagram of a first device according to an embodiment of the present invention;
FIG. 5 is a schematic structural diagram of a second device according to an embodiment of the present invention;
FIG. 6 is a schematic structural diagram of a first device according to another embodiment of the present invention;
FIG. 7 is a schematic structural diagram of a second device according to another embodiment of the present invention; and
FIG. 8 is a schematic structural diagram of a wireless network system according to an embodiment of the present invention.

**DESCRIPTION OF EMBODIMENTS**

The following clearly and completely describes the technical solutions in the embodiments of the present invention with reference to the accompanying drawings in the embodiments of the present invention. The invention is defined in the appended claims. All other references to embodiments which do not fall under the scope of the claims are to be understood as examples useful for understanding the invention.

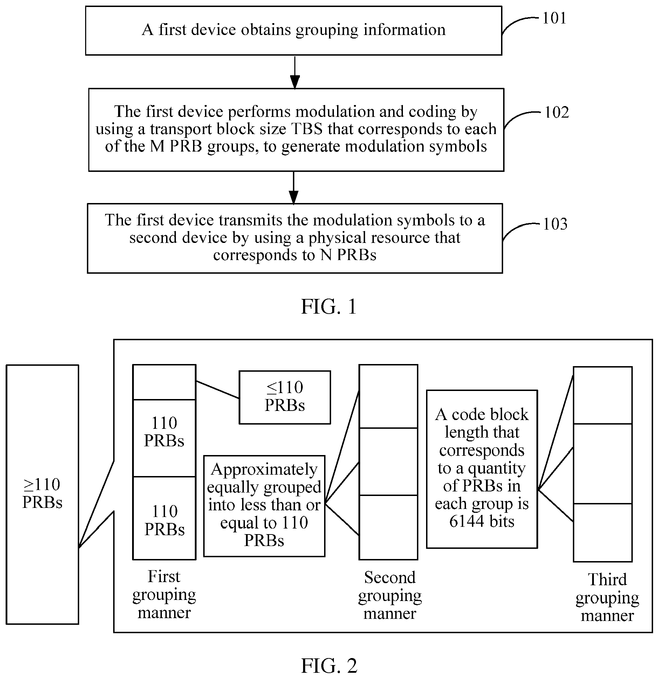

An embodiment of the present invention provides a data transmission method, which is applied to a wireless network, and preferably, to a first device in an LTE system. Preferably, the first device may be a base station or may be user equipment, and this is not limited in this embodiment. Certainly, the LTE system is used as an example in this embodiment for description, but it does not represent that the present invention is limited thereto. Referring to FIG. 1, the data transmission method provided in this embodiment includes the following steps.

101: The first device obtains grouping information.

The grouping information is used to indicate information of grouping N PRBs into M PRB groups, N is an integer greater than 110, and M is a positive integer. Optionally, the grouping information may be preset by the first device, or may be transmitted to the first device by another third device, or may be negotiated by the first device and a peer second device. This is not limited in the present invention.

Specifically, N is a quantity of PRBs used in this data transmission, and a quantity of PRBs in each of the M PRB groups is less than or equal to 110. In the LTE system, a maximum bandwidth is 20 MHz, and in corresponding modulation and coding, modulation and coding can be performed on at most 110 PRBs for each time. Therefore, when the N PRBs are grouped into M groups for modulation and coding, the quantity of PRBs in each PRB group is less than or equal to 110. This enables data transmission on a bandwidth more than 20 MHz to be applicable to an existing modulation and coding scheme.

Preferably, three grouping manners are provided in this embodiment, as shown in FIG. 2. Certainly, FIG. 2 is only used as an example for description, and it does not represent that the present invention is limited to only the three grouping manners shown in FIG. 2.

In a first manner, a quantity of PRBs in each of M-1 PRB groups of the M PRB groups is a first preset value. Preferably, the first preset value is 110. Certainly, the first preset value may be adjusted according to a specific situation.

When the first preset value is 110, if N is an integer multiple of 110, $M = \dfrac{N}{110}$, and the quantity of PRBs in each PRB group is 110. If N is not an integer multiple of 110, $M = \left\lfloor \dfrac{N}{110} \right\rfloor + 1$, that is, M is equal to 1 plus an integer part of a result obtained by dividing N by 110. In this way, M-1 PRB groups each have a quantity of PRBs being 110, and one PRB group has a quantity of PRBs being mod (N, 110), that is, a remainder obtained by dividing N by 110.

In a second manner, a difference between quantities of PRBs in any two PRB groups of the M PRB groups is less than or equal to a first threshold. Preferably, the first threshold is 1. Certainly, a specific value of the first threshold is not limited in the present invention. When the first threshold is 1, if N is an integer multiple of 110, $M = \dfrac{N}{110}$, and a quantity of PRBs in each PRB group is 110. If N is not an integer multiple of 110, it is determined that a quantity of groups is $M = \left\lfloor \dfrac{N}{110} \right\rfloor + 1$, and it is obtained through calculation that a quantity of PRBs in each group is

$A = \left\lfloor \dfrac{N}{M} \right\rfloor < 110$. Then, it is obtained through calculation that a remainder a=mod (N, M) < M, that is, a remainder obtained by dividing N by M. It is determined that a quantity of PRBs in each of a PRB groups of the M PRB groups is A+1, and it is determined that a quantity of PRBs in each of M-a PRB groups is A, so that the N PRBs are grouped approximately equally. For example, N=478. It may be obtained through calculation that M = 5, A = 95, a = 3, and quantities of PRBs of five PRB groups are separately 96, 96, 96, 95, and 95.

In a third manner, for the m^th PRB group of the M PRB groups, a code block length that corresponds to a quantity of PRBs in the m^th PRB group is a second threshold, where m is an integer that satisfies $1 \le m \le M$.

The code block length is a coding length of Turbo code. Preferably, the second threshold is 6144 bits.

Specifically, optionally, according to an $I_{MCS}$ number, transport block sizes TBSs that correspond to the $I_{MCS}$ number with respect to different quantities of PRBs are determined. A first TBS is selected from the TBSs that correspond to the $I_{MCS}$ number with respect to the different quantities of PRBs. A code block length that corresponds to the first TBS is the second threshold. A first quantity of PRBs that corresponds to the first TBS is determined according to the first TBS. The N physical resource blocks PRBs are grouped into the M PRB groups, so that a quantity of PRBs in at least one of the M PRB groups is the first quantity of PRBs. In the LTE system, using Turbo code as an example, a maximum code block length is 6144 bits. Therefore, when the N PRBs are grouped into the M PRB groups, as many code block lengths as possible that correspond to quantities of PRBs in the groups are set to 6144 bits. This improves system performance. Optionally, using Turbo code in the LTE system as an example, when the second threshold is 6144 bits, an $I_{TBS}$ (TBS Index, transport block size index) number is first determined according to an $I_{MCS}$ (Modulation Index, modulation index) number. One $I_{MCS}$ number corresponds to one $I_{TBS}$ number, one $I_{TBS}$ number corresponds to multiple TBSs, and one TBS may be determined according to one $I_{TBS}$ number and a quantity of PRBs. That is, when $I_{TBS}$ numbers are the same, different quantities of PRBs correspond to different TBSs. That is, when $I_{TBS}$ numbers are the same, one quantity of PRBs corresponds to one TBS. For the Turbo code in the LTE system, a quantity of PRBs may be an integer in [1, 110], and therefore, one $I_{TBS}$ number may have 110 TBSs. Further, because in a calculation method in the modulation and coding, (TBS + 24) is an integer multiple of (code block length - 24), where 24 is a length of CRC (Cyclic Redundancy Check, Cyclic Redundancy Check) bits, and when it is determined that a code block length is a maximum value: 6144, (TBS + 24) should be an integer multiple of 6120. If an $I_{TBS}$ number has been determined, a quantity of PRBs that corresponds to a TBS satisfying that (TBS +24) is an integer multiple of 6120 needs to be selected, and the quantity of PRBs is used as the first quantity of PRBs. Certainly, the first quantity of PRBs may include multiple values. In this embodiment, a list of candidate quantities of PRBs is provided, as shown in Table 1.

**Table 1**

| $I_{TBS}$ number | First quantity of PRBs |
|---|---|
| 0 | 110 |
| 1 | 110 |
| 2 | 110 |
| 3 | 101, 102, 103, 104 |
| 4 | 82, 83, 84, 85 |
| 5 | 67, 68, 69 |
| 6 | 56, 57, 58 |
| 7 | 99, 100, 101 |
| 8 | 86, 87, 88 |
| 9 | 77, 78 |
| 10 | 69, 70, 102, 103, 104, 105, 106 |
| 11 | 60, 61, 89, 90, 91, 92 |
| 12 | 53, 54, 79, 80, 81 |
| 13 | 47, 48, 70, 71, 72 |
| 14 | 42, 43, 63, 64, 65, 105, 106, 107, 108 |
| 15 | 40, 59, 60, 61, 98, 99, 100, 101 |
| 16 | 37, 38, 56, 57, 92, 93, 94, 95 |
| 17 | 34, 50, 51, 83, 84, 85, 86, 100, 101, 102, 103 |
| 18 | 31, 46, 47, 76, 77, 78, 91, 92, 93 |
| 19 | 28, 42, 43, 70, 71, 72, 84, 85, 86 |
| 20 | 26, 39, 40, 65, 66, 78, 79, 80, 101, 104, 105, 106, 107 |
| 21 | 24, 36, 37, 60, 61, 72, 73, 74, 96, 97, 98, 99, 108, 109, 110 |
| 22 | 34, 56, 57, 67, 68, 69, 89, 90, 91, 92, 100, 101, 102, 103 |

(continued)

| I_TBS number | First quantity of PRBs |
|---|---|
| 23 | 21, 32, 53, 54, 63, 64, 84, 85, 86, 94, 95, 96, 97 |
| 24 | 20, 30, 50, 59, 60, 61, 79, 80, 81, 89, 90, 91 |
| 25 | 19, 29, 48, 57, 58, 76, 77, 78, 85, 86, 87, 88 |
| 26 | 25, 41, 42, 49, 50, 65, 66, 67, 73, 74, 75, 76 |

When an $I_{TBS}$ number is relatively small, for example, $I_{TBS}$ numbers from 0 to 6, no quantity of PRBs that corresponds to the code block length of 6144 bits exists. One or more quantities of PRBs that correspond to relatively larger code block lengths, for example, first quantities of PRBs shown in a row with an $I_{TBS}$ number 1 to a row with an $I_{TBS}$ number 6 in Table 1, may be selected from quantities of PRBs in each group.

Table 1 is used as an example. When an $I_{MCS}$ number is 28, a corresponding $I_{TBS}$ number is 26. If N is 435, the PRBs may be grouped into six groups, that is, M=6. Table 1 is searched, and quantities of PRBs of the six PRB groups may be separately 76, 76, 76, 76, 76, and 55, and because five PRBs are remaining at last, the five PRBs may be added to a PRB group that has a smallest quantity of PRBs (a quantity of PRBs is 50), to form a group that has a quantity of PRBs being 55. For another example, when an $I_{MCS}$ number is 18, a corresponding $I_{TBS}$ number is 16. When N=415, the PRBs may be grouped into five groups, that is, M=5. Table 1 is searched, and quantities of PRBs of the five PRB groups may be separately 95, 95, 95, 95, and 35. The last remaining 35 PRBs form an independent group.

102: The first device performs modulation and coding by using a transport block size TBS that corresponds to each of the M PRB groups, to generate modulation symbols.

Preferably, one PRB group corresponds to one group of modulation symbols. Optionally, after the quantity of PRBs in each of the M PRB groups is determined, where different quantities of PRBs correspond to different TBSs, modulation and coding is performed on data carried in each of the M PRB groups, according to different TBSs.

103: The first device transmits the modulation symbols to a second device by using a physical resource that corresponds to N PRBs.

Optionally, each group of modulation symbols of M groups of modulation symbols is mapped to the corresponding physical resource according to the M PRB groups; or one group of modulation symbols is formed by using M groups of modulation symbols as a whole, and the group of modulation symbols is mapped to the physical resource that corresponds to the N PRBs. In this way, by grouping the PRBs, a quantity of PRBs in one process of data transmission from the first device to the second device may be greater than 110.

Optionally, control information may be sent to the second device. The control information includes the grouping information and resource mapping information, and the resource mapping information is used to indicate a mapping manner of mapping the modulation symbols to the physical resource that corresponds to the N PRBs.

Preferably, the second device is an independent device, and may be a base station or user equipment. Certainly, the first device and the second device herein are only intended to distinguish the two devices, but are not intended to limit the devices.

According to the data transmission method provided in this embodiment of the present invention, a first device groups N physical resource blocks PRBs into M PRB groups, performs modulation and coding by using a TBS that corresponds to each of the M PRB groups, to generate modulation symbols, and transmits data to a second device by using a physical resource that corresponds to the N PRBs. Therefore, a quantity of PRBs in each group after the grouping is applicable to an existing modulation scheme, thereby resolving a problem that modulation and coding cannot be performed on data because no corresponding TBS exists when a quantity of physical resource blocks PRBs of a wireless communications system is greater than 110.

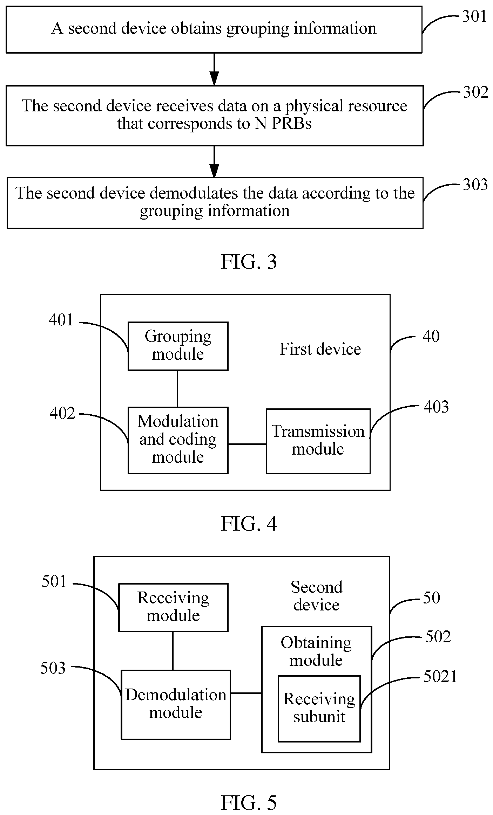

Corresponding to the embodiment that corresponds to FIG. 1, another embodiment of the present invention provides a data transmission method, which is applied to a second device in a wireless network. Optionally, the second device may be a base station or may be user equipment, and this is not limited in this embodiment. With reference to the data transmission method described in the embodiment that corresponds to FIG. 1, a data transmission method on a receiving side is described in this embodiment. Referring to FIG. 3, the method includes the following steps.

301: The second device obtains grouping information.

The grouping information is used to indicate information of grouping N PRBs into M PRB groups. Data carried in the M PRB groups is transmitted after modulation and coding is performed on the data, where M is a positive integer. A quantity of PRBs in each of the M PRB groups is less than or equal to 110.

Optionally, the grouping information may be sent by a first device, that is, a body for executing the data transmission method described in the embodiment that corresponds to FIG. 1, or may be sent by another device. The grouping information may be preset by the second device, or may be negotiated by the second device and a peer first device.

This is not limited in present invention. Optionally, the grouping information may be carried in control information. The control information may further include resource mapping information, and the resource mapping information is used to indicate a mapping manner of mapping the modulation symbols to the physical resource that corresponds to the N PRBs.

302: The second device receives data on a physical resource that corresponds to N PRBs.

N is an integer greater than 110, and is a quantity of PRBs used in this data transmission.

Preferably, in this embodiment, the M PRB groups may be grouped in the three grouping manners described in step 102 in the embodiment that corresponds to FIG. 1. Certainly, another grouping manner may also be used. In an LTE system, a maximum bandwidth is 20 MHz, and in corresponding modulation and coding, modulation and coding can be performed on at most 110 PRBs for each time. Therefore, when the N PRBs are grouped into M groups for modulation and coding, the quantity of PRBs in each PRB group is less than or equal to 110. This enables data transmission on a bandwidth more than 20 MHz to be applicable to an existing modulation and coding scheme.

303: The second device demodulates the data according to the grouping information.

According to the data transmission method provided in this embodiment, a second device obtains grouping information, where the grouping information is used to indicate information of grouping N PRBs into M PRB groups, receives data on a physical resource that corresponds to the N PRBs, and demodulates the data according to the grouping information. Because the N PRBs are grouped into the M PRB groups, a quantity of PRBs in each group after the grouping is applicable to an existing modulation scheme, thereby resolving a problem that modulation and coding cannot be performed on data because no corresponding TBS exists when a quantity of physical resource blocks PRBs of a wireless communications system is greater than 110.

Based on the embodiment that corresponds to FIG. 1 above, an embodiment of the present invention provides a first device, to implement the data transmission method described in the embodiment that corresponds to FIG. 1 above. Referring to FIG. 4, the first device 40 includes a grouping module 401, a modulation and coding module 402, and a transmission module 403.

The grouping module 401 is configured to obtain grouping information. The grouping information is used to indicate information of grouping N physical resource blocks PRBs into M PRB groups, N is an integer greater than 110, and M is a positive integer. Preferably, N is a quantity of PRBs used in this data transmission, and a quantity of PRBs in each of the M PRB groups is less than or equal to 110.

The modulation and coding module 402 is configured to perform modulation and coding by using a TBS that corresponds to each of the M PRB groups obtained by the grouping module 401, to generate modulation symbols.

The transmission module 403 is configured to transmit the modulation symbols generated by the modulation and coding module 402 to a second device by using a physical resource that corresponds to the N PRBs.

Optionally, in a first application scenario,
a quantity of PRBs in each of M-1 PRB groups of the M PRB groups is a first preset value.

Optionally, in a second application scenario,
a difference between quantities of PRBs in any two PRB groups of the M PRB groups is not greater than a first threshold. Preferably, the first threshold is 1.

Optionally, in a third application scenario,
a code block length that corresponds to a quantity of PRBs in the $m^{th}$ PRB group of the M PRB groups is a second threshold, where m is an integer that satisfies $1 \leq m \leq M$.

Further, optionally, in a fourth application scenario,
the grouping module 401 is specifically configured to: determine, according to an $I_{MCS}$ number, transport block sizes TBSs that correspond to the $I_{MCS}$ number with respect to different quantities of PRBs, select a first TBS from the TBSs that correspond to the $I_{MCS}$ number with respect to the different quantities of PRBs, where a code block length that corresponds to the first TBS is the second threshold, determine, according to the first TBS, a first quantity of PRBs that corresponds to the first TBS, and group the N physical resource blocks PRBs into the M PRB groups, so that a quantity of PRBs in at least one of the M PRB groups is the first quantity of PRBs.

Optionally, the transmission module 403 is further configured to map the modulation symbols to the physical resource that corresponds to the N PRBs.

The transmission module 403 is further configured to send control information to the second device. The control information includes the grouping information and resource mapping information, and the resource mapping information is used to indicate a mapping manner of mapping the modulation symbols to the physical resource that corresponds to the N PRBs.

Preferably, the first device is a base station or user equipment.

The first device provided in this embodiment of the present invention groups N physical resource blocks PRBs into M PRB groups, performs modulation and coding by using a TBS that corresponds to each of the M PRB groups, to generate modulation symbols, and transmits data to a second device by using a physical resource that corresponds to the N PRBs. Therefore, a quantity of PRBs in each group after the grouping is applicable to an existing modulation scheme, thereby resolving a problem that modulation and coding cannot be performed on data because no corresponding TBS exists when a quantity of physical resource blocks PRBs of a wireless communications system is greater than 110.

Based on the embodiment that corresponds to FIG. 3 above, an embodiment of the present invention provides a second device, to perform the data transmission method described in the embodiment that corresponds to FIG. 3 above. Referring to FIG. 5, the second device 50 includes a receiving module 502, an obtaining module 501, and a demodulation module 503.

The obtaining module 501 is configured to obtain grouping information. The grouping information is used to indicate information of grouping N physical resource blocks PRBs into M PRB groups, N is an integer greater than 110, and M is a positive integer.

The receiving module 502 is configured to receive data on a physical resource that corresponds to the N PRBs.

The demodulation module 503 is configured to demodulate, according to the grouping information obtained by the obtaining module 501, the data received by the receiving module 502.

Optionally, in a first application scenario,

a quantity of PRBs in each of M-1 PRB groups of the M PRB groups is a first preset value.

Optionally, in a second application scenario,

a difference between quantities of PRBs in any two PRB groups of the M PRB groups is not greater than a first threshold. Preferably, the first threshold is 1.

Optionally, in a third application scenario,

for the $m^{th}$ PRB group of the M PRB groups, a code block length that corresponds to a quantity of PRBs in the $m^{th}$ PRB group is a second threshold, where m is an integer that satisfies $1 \leq m \leq M$.

Optionally, the obtaining module 501 includes a receiving subunit 5021, configured to receive control information sent by a first device, where the control information includes the grouping information and resource mapping information, and the resource mapping information is used to indicate a mapping manner of mapping modulation symbols to the physical resource that corresponds to the N PRBs.

Preferably, the second device is a base station or user equipment.

The second device provided in this embodiment obtains grouping information, where the grouping information is used to indicate information of grouping N PRBs into M PRB groups, receives data on a physical resource that corresponds to the N PRBs, and demodulates the data according to the grouping information. Because the N PRBs are grouped into the M PRB groups, a quantity of PRBs in each group after the grouping is applicable to an existing modulation scheme, thereby resolving a problem that modulation and coding cannot be performed on data because no corresponding TBS exists when a quantity of physical resource blocks PRBs of a wireless communications system is greater than 110.

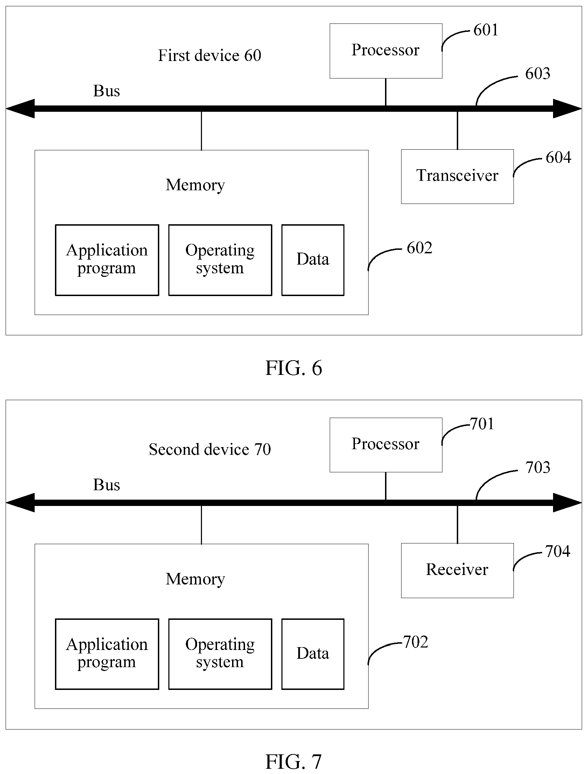

Based on the embodiment that corresponds to FIG. 1 above, another embodiment of the present invention provides a first device 60, to perform the data transmission method described in the embodiment that corresponds to FIG. 1 above. Referring to FIG. 6, the first device may be a base station or user equipment, and this is not limited in the present invention. The first device 60 includes: at least one processor 601, a memory 602, a bus 603, and a transceiver 604. The at least one processor 601, the memory 602, and the transceiver 604 are connected by using the bus 603 and complete communication between each other by using the bus 603.

The bus 603 may be an ISA (Industry Standard Architecture, industry standard architecture) bus, a PCI (Peripheral Component Interconnect, peripheral component interconnect) bus, an EISA (Extended Industry Standard Architecture, extended industry standard architecture) bus, or the like. The bus 603 may be classified into an address bus, a data bus, a control bus, and the like. For ease of representation, the bus 603 is represented in FIG. 6 by using only one bold line, but it does not indicate that there is only one bus or only one type of bus.

The memory 602 is used for application program code for executing the solution of the present invention. The application program code for executing the solution of the present invention is stored in the memory, and is controlled and executed by the processor 601.

The memory may be a read-only memory ROM or a static storage device of another type that can store static information and an instruction; a random access memory RAM or a dynamic storage device of another type that can store information and an instruction; or an electrically erasable programmable read-only memory EEPROM, a compact disc read-only memory CD-ROM or other optical disk storage devices, optical disc storage devices (including a compact disc, a laser disc, an optical disc, a digital versatile disc, a Blu-ray disc, or the like), a disk storage medium or other disk storage devices, or any other medium that can be used to carry or store expected program code in an instruction or a data structure form and that can be accessed by a computer, but is not limited thereto. These memories are connected to the processor by using the bus.

The processor 601 may be a central processing unit 601 (Central Processing Unit, CPU for short), or an application specific integrated circuit (Application Specific Integrated Circuit, ASIC for short), or may be one or more integrated circuits configured to implement this embodiment of the present invention.

The transceiver 604 is configured to obtain grouping information. The grouping information is used to indicate information of grouping N physical resource blocks PRBs into M PRB groups, N is an integer greater than 110, and M is a positive integer.

The processor 601 is configured to perform modulation and coding by using a transport block size TBS that corresponds to each of the M PRB groups obtained by the transceiver 604, to generate modulation symbols.

The transceiver 604 is further configured to transmit the modulation symbols generated by the processor 601 to a second device by using a physical resource that corresponds to the N PRBs.

Optionally, in a first application scenario,
a quantity of PRBs in each of M-1 PRB groups of the M PRB groups is a first preset value.

Optionally, in a second application scenario,
a difference between quantities of PRBs in any two PRB groups of the M PRB groups is not greater than a first threshold.

Optionally, in a third application scenario,
for the $m^{th}$ PRB group of the M PRB groups, a code block length that corresponds to a quantity of PRBs in the $m^{th}$ PRB group is a second threshold, where m is an integer that satisfies $1 \leq m \leq M$.

Further, optionally, in a third application scenario,
the processor 601 is specifically configured to: determine, according to an $I_{MCS}$ number, transport block sizes TBSs that correspond to the $I_{MCS}$ number with respect to different quantities of PRBs, select a first TBS from the TBSs that correspond to the $I_{MCS}$ number with respect to the different quantities of PRBs, where a code block length that corresponds to the first TBS is the second threshold, determine, according to the first TBS, a first quantity of PRBs that corresponds to the first TBS, and group the N physical resource blocks PRBs into the M PRB groups, so that a quantity of PRBs in at least one of the M PRB groups is the first quantity of PRBs.

Optionally, the transceiver 604 is further configured to map the modulation symbols to the physical resource that corresponds to the N PRBs.

The transceiver 604 is further configured to send control information to the second device. The control information includes the grouping information and resource mapping information, and the resource mapping information is used to indicate a mapping manner of mapping the modulation symbols to the physical resource that corresponds to the N PRBs.

The first device provided in this embodiment of the present invention groups N physical resource blocks PRBs into M PRB groups, performs modulation and coding by using a TBS that corresponds to each of the M PRB groups, to generate modulation symbols, and transmits data to a second device by using a physical resource that corresponds to the N PRBs. Therefore, a quantity of PRBs in each group after the grouping is applicable to an existing modulation scheme, thereby resolving a problem that modulation and coding cannot be performed on data because no corresponding TBS exists when a quantity of physical resource blocks PRBs of a wireless communications system is greater than 110.

Based on the embodiment that corresponds to FIG. 3 above, another embodiment of the present invention provides a second device 70, to perform the data transmission method described in the embodiment that corresponds to FIG. 3 above. Referring to FIG. 7, the second device may be a base station or user equipment, and this is not limited in the present invention. The second device 70 includes: at least one processor 701, a memory 702, a bus 703, and a receiver 704. The at least one processor 701, the memory 702, and the receiver 704 are connected by using the bus 703 and complete communication between each other by using the bus 703.

The bus 703 may be an ISA (Industry Standard Architecture, industry standard architecture) bus, a PCI (Peripheral Component, peripheral component interconnect) bus, an EISA (Extended Industry Standard Architecture, extended industry standard architecture) bus, or the like. The bus 703 may be classified into an address bus, a data bus, a control bus, and the like. For ease of representation, the bus 703 is represented in FIG. 7 by using only one bold line, but it does not indicate that there is only one bus or only one type of bus.

The memory 702 is used for application program code for executing the solution of the present invention. The application program code for executing the solution of the present invention is stored in the memory, and is controlled and executed by the processor 701.

The memory may be a read-only memory ROM or a static storage device of another type that can store static information and an instruction; a random access memory RAM or a dynamic storage device of another type that can store information and an instruction; or an electrically erasable programmable read-only memory EEPROM, a compact disc read-only memory CD-ROM or other optical disk storage devices, optical disc storage devices (including a compact disc, a laser disc, an optical disc, a digital versatile disc, a Blu-ray disc, or the like), a disk storage medium or other disk storage devices, or any other medium that can be used to carry or store expected program code in an instruction or a data structure form and that can be accessed by a computer, but is not limited thereto. These memories are connected to the processor by using the bus.

The processor 701 may be a central processing unit 701 (Central Processing Unit, CPU for short), or an application specific integrated circuit (Application Specific Integrated Circuit, ASIC for short), or may be one or more integrated circuits configured to implement this embodiment of the present invention.

The processor 701 is configured to obtain grouping information. The grouping information is used to indicate information of grouping N physical resource blocks PRBs into M PRB groups, N is an integer greater than 110, and M is a positive integer.

The receiver 704 is configured to receive data on a physical resource that corresponds to the N PRBs.

The processor 701 is further configured to demodulate, according to the obtained grouping information, the data received by the receiver 704.

Optionally, in a first application scenario,
a quantity of PRBs in each of M-1 PRB groups of the M PRB groups is a first preset value.

Optionally, in a second application scenario,
a difference between quantities of PRBs in any two PRB groups of the M PRB groups is not greater than a first threshold.

Optionally, in a third application scenario,
for the $m^{th}$ PRB group of the M PRB groups, a code block length that corresponds to a quantity of PRBs in the $m^{th}$ PRB group is a second threshold, where m is an integer that satisfies $1 \leq m \leq M$.

Optionally, the processor 701 is further configured to receive, by using the receiver 704, control information sent by a first device. The control information includes the grouping information and resource mapping information, and the resource mapping information is used to indicate a mapping manner of mapping modulation symbols to the physical resource that corresponds to the N PRBs.

The second device provided in this embodiment obtains grouping information, where the grouping information is used to indicate information of grouping N PRBs into M PRB groups, receives data on a physical resource that corresponds to the N PRBs, and demodulates the data according to the grouping information. Because the N PRBs are grouped into the M PRB groups, a quantity of PRBs in each group after the grouping is applicable to an existing modulation scheme, thereby resolving a problem that modulation and coding cannot be performed on data because no corresponding TBS exists when a quantity of physical resource blocks PRBs of a wireless communications system is greater than 110.

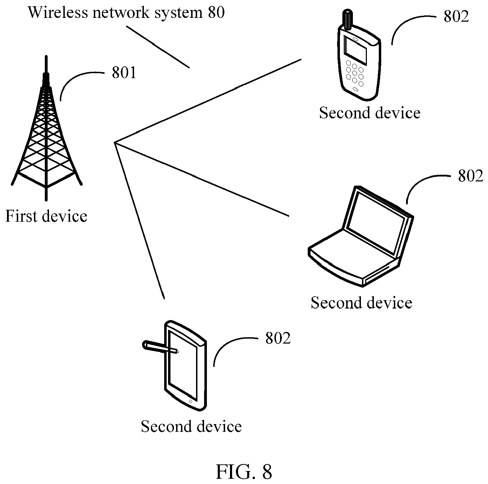

With reference to the embodiments that correspond to FIG. 1 to FIG. 7 above, an embodiment of the present invention provides a wireless network system, to perform the data transmission methods described in the embodiments in FIG. 1 and FIG. 3 above. Referring to FIG. 8, the wireless network system 80 includes a first device 801 and a second device 802.

The first device 801 is the first device described in the embodiment that corresponds to FIG. 4, and the second device 802 is the second device described in the embodiment that corresponds to FIG. 5; or
the first device 801 is the first device described in the embodiment that corresponds to FIG. 6, and the second device 802 is the second device described in the embodiment that corresponds to FIG. 7.

Preferably, the first device 801 may be a base station or user equipment, and the second device 802 may be a base station or user equipment. This is not limited in present invention.

According to the wireless network system provided in this embodiment of the present invention, the first device groups N physical resource blocks PRBs into M PRB groups, performs modulation and coding by using a TBS that corresponds to each of the M PRB groups, to generate modulation symbols, and transmits data to a second device by using a physical resource that corresponds to the N PRBs. Therefore, a quantity of PRBs in each group after the grouping is applicable to an existing modulation scheme, thereby resolving a problem that modulation and coding cannot be performed on data because no corresponding TBS exists when a quantity of physical resource blocks PRBs of a wireless communications system is greater than 110.

With descriptions of the foregoing embodiments, a person skilled in the art may clearly understand that the present invention may be implemented by hardware, firmware or a combination thereof. When the present invention is implemented by software, the foregoing functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium accessible to a computer. The following is taken as an example but is not limited: The computer readable medium may include a RAM (Random Access Memory, random access memory), a ROM (Read-Only Memory, read-only memory), an EEPROM (Electrically Erasable Programmable Read-Only Memory, electrically erasable programmable read-only memory), a CD-ROM (Compact Disc Read-Only Memory, compact disc read-only memory) or other optical disk storage, a disk storage medium or other disk storage, or any other medium that can be used to carry or store expected program code in a command or data structure form and can be accessed by a computer. In addition, any connection may be appropriately defined as a computer-readable medium. For example, if software is transmitted from a website, a server or another remote source by using a coaxial cable, an optical fiber/cable, a twisted pair, a DSL (Digital Subscriber Line, digital subscriber line) or wireless technologies such as infrared ray, radio and microwave, the coaxial cable, optical fiber/cable, twisted pair, DSL or wireless technologies such as infrared ray, radio and microwave are included in a definition of a medium to which they belong. For example, a disk and a disc used by the present invention includes a CD (Compact Disc, compact disc), a laser disc, an optical disc, a DVD disc (Digital Versatile Disc, digital versatile disc), a floppy disk and a Blu-ray disc, where the disk generally copies data by a magnetic means, and the disc copies data optically by a laser means. The foregoing combination should also be included in the protection scope of the computer-readable medium.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

**Claims**

1.  A data transmission method, comprising:

    • obtaining, by a first device, grouping information, wherein the grouping information is used to indicate information of grouping N physical resource blocks PRBs into M PRB groups, N is an integer greater than 110, and M is a positive integer (step 101);
    • performing, by the first device, modulation and coding by using a transport block size TBS that corresponds to each of the M PRB groups, to generate modulation symbols (step 102); and
    • transmitting, by the first device, the modulation symbols to a second device by using a physical resource that corresponds to the N PRBs (step 103),

    **characterized in that**

    • a code block length that corresponds to a quantity of PRBs in a $m^{th}$ PRB group of the M PRB groups is a second threshold, wherein m is an integer that satisfies $1 \leq m \leq M$.

2.  A data reception method, comprising:

    • obtaining, by a second device, grouping information, wherein the grouping information is used to indicate information of grouping N physical resource blocks PRBs into M PRB groups, N is an integer greater than 110, and M is a positive integer (step 301);
    • receiving, by the second device, data on a physical resource that corresponds to the N PRBs (step 302); and
    • demodulating, by the second device, the data according to the grouping information (step 303),

    **characterized in that**

    • a code block length that corresponds to a quantity of PRBs in a $m^{th}$ PRB group of the M PRB groups is a second threshold, wherein m is an integer that satisfies $1 \leq m \leq M$.

3.  A device comprising means configured to perform the method according to claim 1.

4.  A device comprising means configured to perform the method according to claim 2.

**Patentansprüche**

1.  Datenübertragungsverfahren, umfassend:

    • Erhalten, durch eine erste Vorrichtung, von Gruppierungsinformationen, wobei die Gruppierungsinformationen dazu verwendet werden, um Informationen zum Gruppieren von N physischen Ressourcenblöcken bzw. PRBs in M PRB-Gruppen anzugeben, wobei N eine ganze Zahl größer als 110 ist und M eine positive ganze Zahl ist (Schritt 101);
    • Durchführen, durch die erste Vorrichtung, einer Modulation und Codierung unter Verwendung einer Transportblockgröße bzw. TBS, die jeder der M PRB-Gruppen entspricht, um Modulationssymbole zu erzeugen (Schritt 102); und
    • Übertragen, durch die erste Vorrichtung, der Modulationssymbole zu einer zweiten Vorrichtung unter Verwendung einer physischen Ressource, die den N PRBs entspricht (Schritt 103),

    **dadurch gekennzeichnet, dass**

    • eine Codeblocklänge, die einer Menge von PRBs in einer m-ten PRB-Gruppe der M PRB-Gruppen entspricht, eine zweite Schwelle ist, wobei m eine ganze Zahl ist, die $1 \leq m \leq M$ erfüllt.

2. Datenempfangsverfahren, umfassend:

   • Erhalten, durch eine zweite Vorrichtung, von Gruppierungsinformationen, wobei die Gruppierungsinformationen dazu verwendet werden, um Informationen zum Gruppieren von N physischen Ressourcenblöcken bzw. PRBs in M PRB-Gruppen anzugeben, wobei N eine ganze Zahl größer als 110 ist und M eine positive ganze Zahl ist (Schritt 301);
   • Empfangen, durch die zweite Vorrichtung, von Daten auf einer physischen Ressource, die den N PRBs entspricht (Schritt 302); und
   • Demodulieren, durch die zweite Vorrichtung, der Daten gemäß den Gruppierungsinformationen (Schritt 303),

   **dadurch gekennzeichnet, dass**

   • eine Codeblocklänge, die einer Menge von PRBs in einer m-ten PRB-Gruppe der M PRB-Gruppen entspricht, eine zweite Schwelle ist, wobei m eine ganze Zahl ist, die $1 \leq m \leq M$ erfüllt.

3. Vorrichtung, die Mittel umfasst, die ausgelegt sind zum Durchführen des Verfahrens nach Anspruch 1.

4. Vorrichtung, die Mittel umfasst, die ausgelegt sind zum Durchführen des Verfahrens nach Anspruch 2.


**Revendications**

1. Procédé de transmission de données, comprenant :

   • l'obtention, par un premier dispositif, d'information de regroupement, les informations de regroupement servant à indiquer des informations de regroupement de N blocs de ressource physique, notés PRB, en M groupes de PRB, N étant un entier supérieur à 110 et M étant un entier positif (étape 101) ;
   • la mise en oeuvre, par le premier dispositif, d'une modulation et d'un codage à l'aide d'une taille de bloc de transport, notée TBS, correspondant à chacun des M groupes de PRB, aux fins de générer des symboles de modulation (étape 102) ; et
   • la transmission, par le premier dispositif, des symboles de modulation à un deuxième dispositif à l'aide d'une ressource physique correspondant aux N PRB (étape 103),
   **caractérisé en ce que**
   • une longueur de bloc de code correspondant à une quantité de PRB dans un m-ième groupe de PRB des M groupes de PRB est un deuxième seuil, m étant un entier qui vérifie $1 \leq m \leq M$.

2. Procédé de réception de données, comprenant :

   • l'obtention, par un deuxième dispositif, d'information de regroupement, les informations de regroupement servant à indiquer des informations de regroupement de N blocs de ressource physique, notés PRB, en M groupes de PRB, N étant un entier supérieur à 110 et M étant un entier positif (étape 301) ;
   • la réception, par le deuxième dispositif, de données sur une ressource physique correspondant aux N PRB (étape 302) ; et
   • la démodulation, par le deuxième dispositif, des données selon les informations de regroupement (étape 303),
   **caractérisé en ce que**
   • une longueur de bloc de code correspondant à une quantité de PRB dans un m-ième groupe de PRB des M groupes de PRB est un deuxième seuil, m étant un entier qui vérifie $1 \leq m \leq M$.

3. Dispositif comprenant des moyens configurés pour mettre en oeuvre le procédé selon la revendication 1.

4. Dispositif comprenant des moyens configurés pour mettre en oeuvre le procédé selon la revendication 2.

| A first device obtains grouping information | 101 |

↓

| The first device performs modulation and coding by using a transport block size TBS that corresponds to each of the M PRB groups, to generate modulation symbols | 102 |

↓

| The first device transmits the modulation symbols to a second device by using a physical resource that corresponds to N PRBs | 103 |

FIG. 1

≥110 PRBs

First grouping manner
110 PRBs
110 PRBs
≤110 PRBs
Approximately equally grouped into less than or equal to 110 PRBs

Second grouping manner
A code block length that corresponds to a quantity of PRBs in each group is 6144 bits

Third grouping manner

FIG. 2

| A second device obtains grouping information | 301 |

$\downarrow$

| The second device receives data on a physical resource that corresponds to N PRBs | 302 |

$\downarrow$

| The second device demodulates the data according to the grouping information | 303 |

**FIG. 3**

```
First device                              40

401 ── Grouping
        module

402 ── Modulation      Transmission      403
        and coding      module
        module
```

**FIG. 4**

```
Second device                  50

501 ── Receiving
        module
                     Obtaining        502
                      module
503 ── Demodulation
        module         Receiving     5021
                        subunit
```

**FIG. 5**

FIG. 6

FIG. 7

Wireless network system 80

801

First device

802

Second device

802

Second device

802

Second device

FIG. 8

# EP 3 209 057 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20130308504 A1
- WO 2009118097 A2

- CN 104038970 A